# EUROPÄISCHE PATENTSCHRIFT

(11) **EP 2 280 798 B1**
(45) Veröffentlichungstag und Bekanntmachung des Hinweises auf die Patenterteilung: **12.06.2013**
(21) Anmeldenummer: 09737863.2
(22) Anmeldetag: 28.04.2009
(51) Int. Cl.: B23F 1/06, B23F 23/12, B23C 3/00, B23Q 1/01

(54) **WERKZEUGMASCHINE ZUR EINARBEITUNG EINER VERZAHNUNG IN DIE INNENSEITE EINES RINGFÖRMIGEN WERKSTÜCKS**
MACHINE TOOL FOR INCORPORATING GEAR TEETH INTO THE INNER SIDE OF AN ANNULAR WORKPIECE
MACHINE-OUTIL POUR L'INCORPORATION D'UNE DENTURE DANS LA FACE INTÉRIEURE D'UNE PIÈCE À USINER ANNULAIRE

(30) Priorität: 28.04.2008 DE 102008021238
(43) Veröffentlichungstag der Anmeldung: 09.02.2011
(73) Patentinhaber: IMO Holding GmbH, 91350 Gremsdorf (DE)
(72) Erfinder: RUSS, Erich, 91350 Gremsdorf (DE); SEIFERT, Lothar, 91325 Adelsdorf (DE); GOLD, Oliver, 90455 Nürnberg (DE)
(74) Vertreter: Küchler, Stefan
(86) Internationale Anmeldenummer: PCT/EP2009/003079
(87) Internationale Veröffentlichungsnummer: WO 2009/132819

(56) Entgegenhaltungen:
- DE-A1- 10 259 222
- GB-A- 1 219 081
- JP-A- 2000 257 675

## Beschreibung

Die Erfindung richtet sich auf eine Werkzeugmaschine zum spanenden Einarbeiten einer Verzahnung in die Innenseite eines ringförmigen Werkstücks.

Die Herstellung von Verzahnungen an der Innenseite ringförmiger Gebilde ist etwas schwieriger als das Einarbeiten einer Außenverzahnung an Zahnrädern od. dgl. Insbesondere sind verschiedene Verfahren mit einer Abwälzung eines schneckenförmigen Fräsers an der zu verzahnenden Oberfläche nicht möglich. Für eine Innenverzahnung kommen als Bearbeitungsvorgänge vielmehr Stoßen oder - insbesondere bei der Bearbeitung großer Ringe - das Einfräsen der Zähne mittels eines Fräsers in Betracht. Dabei wird das zu bearbeitende, noch unverzahnte Werkstück auf einen bspw. kreisscheibenförmigen Tisch gelegt und dort fixiert. Der Bearbeitungskopf wird von einem seitlich neben dem Tisch angeordneten Stativ mittels eines Auslegers über den Innenraum innerhalb des zu bearbeitenden Rings gehalten. Durch Antrieb des Bearbeitungswerkzeugs - Rotation eines Fräskopfs oder Hubbewegung bei einer Stoßmaschine - wird ein Zahn nach dem anderen eingearbeitet, wobei nach Fertigstellen eines Zahns der Tisch jeweils um ein der Zahnteilung entsprechendes Maß weitergedreht wird. Bei dieser Vorgehensweise stellt der den Bearbeitungskopf tragende Ausleger eine Schwachstelle dar, weil die hohen, vom Bearbeitungskopf herrührenden Schnittkräfte von diesem nur unzulänglich aufgenommen werden können und ein Schwingen der Anordnung daher unvermeidbar ist. Ein solches Schwingen ist jedoch äußerst unerwünscht, weil daraus ungenaue Schnitte resultieren.

Aus diesen Nachteilen des beschriebenen Standes der Technik resultiert eine gattungsgemäße Werkzeugmaschine, die bei einem ordnungsgemäßen Arbeitsvorgang auftretenden Bearbeitungskräfte, insbesondere Schnittkräfte, die Maschine nicht in Schwingungen versetzen können.

Sie besitzt einen ringförmigen Bearbeitungstisch zum Auflegen oder Abstützen eines, insbesondere flach aufgelegten, Werkstücks, sowie ein Chassis zum Halten, Stützen, Lagern und/oder Führen eines Werkzeugkopfs zumindest während der Bearbeitung, das sich von einem Maschinenbett (oder: Bett) oder Fundament unterhalb des Bearbeitungstischs der Maschine durch den ringförmigen Bearbeitungstisch oder durch eine zentrale Öffnung desselben hindurch erstreckt.

Indem solchermaßen der Bearbeitungskopf auf kürzestem Wege mit dem Maschinenbett oder -fundament verbunden ist, nämlich durch eine zentrale Öffnung in dem Maschinentisch hindurch, lassen sich auch hohe Bearbeitungskräfte, insbesondere Schnittkräfte, problemlos in das Bett oder Fundament der Maschine ableiten, ohne dass davon merkliche Schwingungen angeregt werden. Denn im Gegensatz zu einem frei tragenden Ausleger wie beim Stand der Technik kann das erfindungsgemäße Chassis des Bearbeitungskopfes äußerst massiv und damit extrem steif ausgebildet werden.

Es hat sich als günstig erwiesen, dass der Bearbeitungstisch um eine vertikale Symmetrieachse rotierbar gelagert ist. Damit wird eine Drehung des Chassis samt Bearbeitungskopf vermieden, was dessen Führungsgenauigkeit weiter erhöht. Andererseits kann der ringförmige Werkzeugtisch seinerseits höchst präzise gelagert werden, so dass ein darauf konzentrisch zur Drehachse festgelegtes Werkstück bei seiner Drehung keinerlei radialen Versatz erfährt und die Bearbeitung daher mit höchster Präzision erfolgen kann.

Dokument DE 102 59 222 offenbart eine Werkzeugmaschine nach dem Oberbegriff des Anspruchs 1.

In einer vorteilhaften Ausführungsform ist vorgesehen, den Bearbeitungstisch an der Oberseite eines, vorzugsweise etwa mantelförmigen, Unterbaus zu lagern. Einfach ausgedrückt, bietet dieser Unterbau (oder: Mantel oder mantelförmige Unterbau) vorzugsweise in seinem Inneren genügend Platz für den Bearbeitungskopf samt dessen tragenden Chassis sowie ggf. einem beide abstützenden Schlitten. Der Unterbau kann auch großflächige Ausnehmungen aufweisen, einmal als Zugang zum Inneren, andererseits aber auch, um Bearbeitungskopf, Chassis, etc. ggf. auch in weiten Grenzen verstellen oder verfahren zu können. Um durch eine solche Unterbrechung des Unterbaus dessen Stabilität nicht übermäßig zu schwächen, ist vorzugsweise die Höhe derartiger Ausnehmungen kleiner gewählt als die Höhe des mantelförmigen Unterbaus, so dass über und/oder unterhalb der Ausnehmung noch ein Steg verbleibt, welcher den Umfang des Unterbaus definiert.

Entsprechend dem abzustützenden, etwa kreisringförmigen Tisch kann dessen Unterbau im Bereich seiner Oberseite eine Ausnehmung aufweisen, vorzugsweise mit kreisringförmigem Querschnitt, insbesondere mit einem lichten Durchmesser entsprechend dem Innendurchmesser der Drehverbindung, um einen maximalen Verfahrweg zu erhalten. Der Unterbau ist in der Lage, den Tisch entlang dessen gesamten Umfangs lückenlos abzustützen, so dass Durchbiegungen unter dem Gewicht eines oder mehrerer, aufliegender Werkstücke ausgeschlossen sind.

Es ist vorteilhaft, wenn der Unterbau an der Oberseite eine kreisringförmigen Querschnitt und/oder eine kreisförmige Außenkontur im Querschnitt aufweist und damit gut an den Bearbeitungstisch in der Form angepasst ist. Der Querschnitt wird bevorzugt in einer Schnittebene senkrecht zur vertikalen Richtung und/oder Schwerkraft oder senkrecht zur Drehachse betrachtet.

Andererseits kann der Unterbau für den Bearbeitungstisch im Bereich seiner Basis einen etwa oder wenigstens annähernd polygonalen, vorzugsweise viereckigen oder rechteckigen, insbesondere etwa quadratischen, Querschnitt oder eine etwa oder wenigstens annähernd polygonale, insbesondere viereckige oder rechteckige, insbesondere etwa quadratische, Außenkontur im Querschnitt aufweisen.

Die viereckige oder rechteckige Geometrie ist vorteilhaft an den Umstand angepasst, dass das Chassis samt Bearbeitungskopf in einer radialen Richtung, bezogen auf die Drehachse des Bearbeitungstischs, verschiebbar sein sollte, um das Bearbeitungswerkzeug, bspw. einen Fräser, von innen gegen ein Werkstück anzustellen. Eine solche Verschiebung bedarf einer tunnelartigen Konstruktion mit zueinander parallelen Seitenkanten und vorzugsweise mit kurzen, etwa gleich langen Führungsschienen. Dieselben spannen ein Viereck oder sind orthogonal zueinander gerichtet, so dass die beiden zueinander orthogonalen Verschieberichtungen und die entsprechenden Führungselemente oder Führungsschienen vorzugsweise entlang der Seitenkanten der viereckigen oder rechteckigen Basis des Innenbaus ausgerichtet werden und die Gestaltung des Innenraums innerhalb des Unterbaus entsprechend angepasst wird.

Insbesondere aus Gründen einer optimalen, möglichst biegesteifen Statik ist bevorzugt, wenn sich der Querschnitt des Unterbaus für den Bearbeitungstisch zwischen seiner Oberseite, an der der Bearbeitungstisch gelagert ist, einerseits und seiner Basis, die am oder zum Maschinenbett hin angeordnet ist, andererseits sich stetig ändert. Insbesondere geht die kreisförmige Außenkontur des Unterbaus und/oder dessen Querschnitts an der Oberseite stetig in die viereckige oder rechteckige, insbesondere quadratische, Außenkontur des Unterbaus und/oder dessen Querschnitts an seiner Basis über.

Dies kann in einer Ausführungsform dadurch erreicht werden, dass der Mantel oder die Außenfläche des Unterbaus im Bereich von vier, jeweils um 90° gegeneinander versetzten Stellen seiner kreisförmigen Oberkante etwa vertikal bis zu der Unterseite oder Basis des Unterbaus verläuft, also mit einer maximalen Steigung oder einem maximalen Steigungswinkel ϕₘₐₓ gegenüber der horizontalen Grundfläche oder Basisfläche von etwa 90°. Diese Bereiche der Unterseite oder Basis können jeweils die Seitenmitten von vier Kanten einer quadratischen Unterseite oder Basis des Mantels bilden. Ein vertikaler Schnitt durch die Mantelfläche entlang der Drehachse der oberseitigen Kreisringfläche einerseits sowie durch eine der vier Ecken dieses Quadrats andererseits hat dagegen eine minimale Steigung oder minimalen Steigungswinkel ϕₘᵢₙ; diese oder der liegt bspw. zwischen 40° und 80°, insbesondere zwischen 50° und 70°. Zwischen diesen acht Linien, welche um jeweils 45° bezogen auf die Drehachse des Bearbeitungstischs gegeneinander versetzt sind, variiert der Steigungswinkel ϕ jeweils zwischen ϕₘᵢₙ und ϕₘₐₓ gemäß ϕₘᵢₙ ≤ < ϕₘₐₓ.

Mit anderen Worten, die Wandung oder Außenfläche des Unterbaus verläuft
(i) im Bereich von vier, jeweils um 90° gegeneinander versetzten äußeren Stellen an der wenigstens annähernd kreisförmigen Oberseite wenigstens annähernd vertikal oder unter einem maximalen Steigungswinkel bis zu der Basis des Unterbaus, insbesondere jeweils zu der Seitenmitte jeweils einer von vier Kanten der rechteckigen oder quadratischen Basis,
(ii) im Bereich von vier weiteren inneren Stellen an der wenigstens annähernd kreisförmigen Oberseite, die in Umfangsrichtung jeweils zwischen zwei der äußeren Stellen liegen, unter wenigstens einem minimalen Steigungswinkel bis zu der Basis des Unterbaus, insbesondere jeweils zu einem zugehörigen Eck der rechteckigen oder quadratischen Basis, und
(iii) in Umfangsrichtung zwischen den äußeren Stellen und den inneren Stellen unter variierenden Steigungswinkeln zwischen dem maximalen Steigungswinkel und dem minimalen Steigungswinkel.

Die Kantenlänge dieses Quadrats entspricht bevorzugt etwa dem Durchmesser der kreisringförmigen Oberseite. Es bildet also insbesondere der Kreis an der Oberseite des Unterbaus in der Projektion auf die Basis einen eingeschriebenen Kreis in dem Quadrat an der Basis des Unterbaus, der also denselben Mittelpunkt wie das Quadrat aufweist und die Seitenkanten des Quadrats in deren Mitte tangential berührt.

In einer anderen, Ausführungsform kann sich die Mantelfläche oder Außenfläche des Unterbaus auch aus vier ebenen und/oder vertikalen Wandabschnitten oder Seitenwänden zusammensetzen, welche an der Basis des Unterbaus oder Mantels auf den Kanten des dortigen Vierecks bzw. Quadrats aufsetzen, einerseits und aus vier die vier ebenen und/oder vertikalen Wandabschnitte oder Seitenwände miteinander verbindenden Wölbungsabschnitten oder gekrümmten, vorzugsweise konvex gekrümmten, d.h. nach außen gewölbten, Zwischenwänden. Bevorzugt verjüngen sich die Wölbungsabschnitte oder Zwischenwände einerseits zur Basis hin und/oder münden punktförmig in deren Ecken und/oder erweitern sich nach oben zur Oberseite hin und/oder treffen im Bereich der Oberseite schließlich zusammen bzw. gehen ineinander über, insbesondere wenn sich die, insbesondere vertikalen, Seitenwände dort bis zu einer Wandspitze hin verjüngen.

Insbesondere geht von jedem Punkt der Oberseite und auch von jedem Punkt der Basis des Unterbaus wenigstens je eine gerade Linie aus, welche entlang des Mantels bis zu der jeweils gegenüber liegenden Stirnseite des Mantels - Unterseite bzw. Oberseite - verläuft. Dabei streben sämtliche derartigen, von den Kanten des Quadrats ausgehenden Linien nach oben zu der Spitze der betreffenden Seitenwand, wo sie sich allesamt treffen, wie die von der Basis eines (gleichschenkligen) Dreiecks zu dessen Spitze laufenden Linien. Wiederum konvergieren alle von einem Umfangsbereich der Oberseite, der zwischen zwei benachbarten dieser vier Punkten liegt, ausgehenden Linien zu jeweils einer Ecke des Basis-Vierecks, entsprechend einem Ausschnitt der Mantelfläche eines (schiefen) auf der Spitze stehenden Kegels, dessen Spitze nicht über bzw. unter der Grundfläche liegt, sondern seitlich außerhalb derselben. Demnach setzt sich die Mantelfläche vorzugsweise durch abwechselnd aneinandergereihte, aufrecht stehende, vorzugsweise gleichschenklige Dreiecke und dazwischen jeweils einem Mantelabschnitt eines auf der Spitze stehenden, vorzugsweise schiefen Kegels zusammen, wobei jeweils eine Randlinie eines Dreieckabschnitts mit einer Randlinie eines Kegelabschnitts zusammenfallen.

Es liegt im Rahmen der Erfindung, dass das Chassis zum Halten, Stützen, Lagern und/oder Führen eines Werkzeugkopfs einen horizontal verfahrbaren Schlitten aufweist. Vorzugsweise ist die Schlittenbahn durch eine oder mehrere Führungsschienen definiert, die an dem Maschinenbett oder - fundament verankert ist/sind. Sofern nur eine einzige Schiene vorhanden ist, sollte sie durch die Drehachse bzw. durch den Mittelpunkt des Basis-Vierecks laufen; zwei Schienen können symmetrisch zu beiden Seiten dieses Mittelpunkts verlaufen. Vorzugsweise wird diese Schienenbahn an zwei Stirnseiten begrenzt, von denen eine innerhalb des mantelförmigen Behältnisses liegt, die andere außerhalb desselben. Im Bereich dieser Führungsschiene(n) ist der mantelförmige Unterbau unterbrochen, so dass der Schlitten zumindest bereichsweise aus dem Unterbau heraus und zurück fahren kann.

Die Erfindung lässt sich dahingehend weiterbilden, dass das Chassis zum Halten, Stützen, Lagern und/oder Führen eines Werkzeugkopfs einen vertikal verfahrbaren Schlitten aufweist. Während der horizontal verfahrbare Schlitten dem Anstellen des Fräs- oder Bearbeitungskopfs dient, wird dieser mittels des vertikal verfahrbaren Schlittens gehoben oder gesenkt, um eine gerade Verzahnung herzustellen mit entlang der Drehachse konstanten Zahnquerschnitten.

Indem der vertikal verfahrbare Schlitten an dem horizontal verfahrbaren Schlitten geführt ist, kann der Bearbeitungskopf innerhalb vorgegebener Grenzen entlang einer vertikalen Ebene verstellt werden. Dabei bewegt sich der Vertikal-Schlitten innerhalb der Ausnehmung des Bearbeitungstisches auf und ab, während der Horizontal-Schlitten auf seinen Führungsschienen mehr oder weniger weit in den Innenraum des mantelförmigen Unterbaus hineingefahren wird. Der Horizontal-Schlitten ist dazu niedriger als der Unterbau, so dass er unterhalb des Bearbeitungstisches hindurchpasst; der Vertikal-Schlitten ist schlanker als die Ausnehmung innerhalb des Bearbeitungstischs, damit er durch diese Ausnehmung hindurchfahren kann.

Ferner sind Haltevorrichtungen, insbesondere Bremsen, vorgesehen zu Fixieren des horizontal verfahrbaren Schlittens während der Bearbeitung.

Als Bearbeitungswerkzeug dient vorwiegend ein Fräswerkzeug, das vorzugsweise an einem Fräskopf in Form eines vertikal verfahrbaren Schlitten angeordnet, insbesondere gelagert ist. Es kann sich hierbei vorzugsweise um einen scheibenförmigen Körper mit an seinem Umfang angeordneten Schneidezähnen handeln, deren Geometrie solchermaßen festgelegt ist, dass ein Axialschnitt durch einen Zahn des Werkzeugs etwa dem Querschnitt des Spaltes zwischen zwei benachbarten Zähnen der einzufräsenden Innenverzahnung entspricht.

Ein solches Fräswerkzeug sollte um eine horizontale Achse drehbar gelagert sein, derart, dass die ebene Grund- oder Hauptfläche des scheibenförmigen Werkzeugkörpers vertikal orientiert ist, vorzugsweise etwa radial bezüglich der Drehachse des Bearbeitungstisches.

Schließlich können die Drehachse des Fräswerkzeugs, die Verschieberichtung des vertikal verfahrbaren Schlittens und die Verschieberichtung des horizontal verfahrbaren Schlittens jeweils rechte Winkel miteinander einschließen, so dass die mantelseitigen Zähne des rotierenden Werkzeugs in ihrem Eingriffsbereich eine etwa vertikale Bewegung ausführen. Dies hat den Vorteil, dass die bei einem derartigen Schnittvorgang auftretenden Kräfte etwa vertikal gerichtet sind und daher vom Werkstück entweder durch die horizontale Tischplatte aufgenommen werden oder - bei umgekehrter Drehrichtung des Fräsers - ganz oder überwiegend durch die Gewichtskraft des zu bearbeitenden Werkstücks kompensiert werden. Das Werkstück wird dabei nicht verschoben, weil es festgespannt ist, denn dessen Gewichtskraft allein reicht hier nicht zum Fixieren aus.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

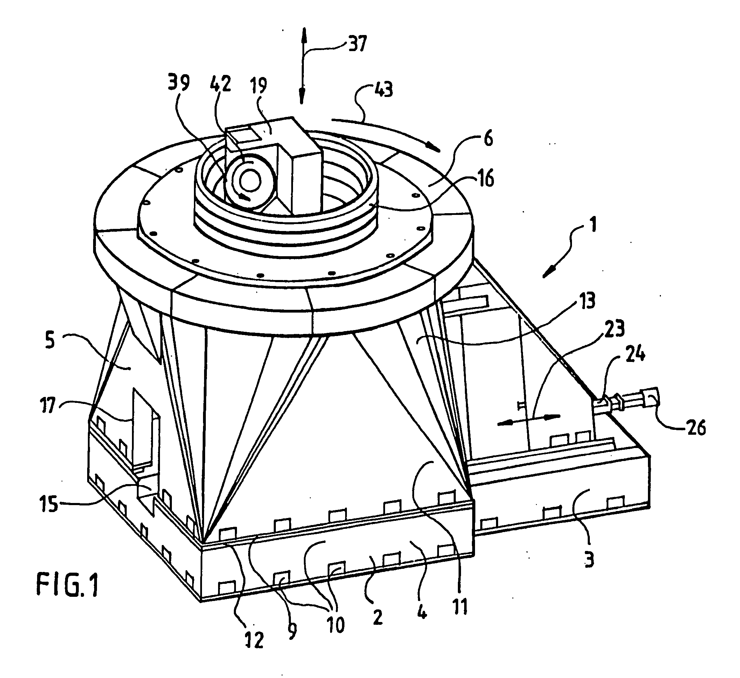

- FIG. 1: eine erfindungsgemäße Werkzeugmaschine in einer perspektivischen Ansicht;

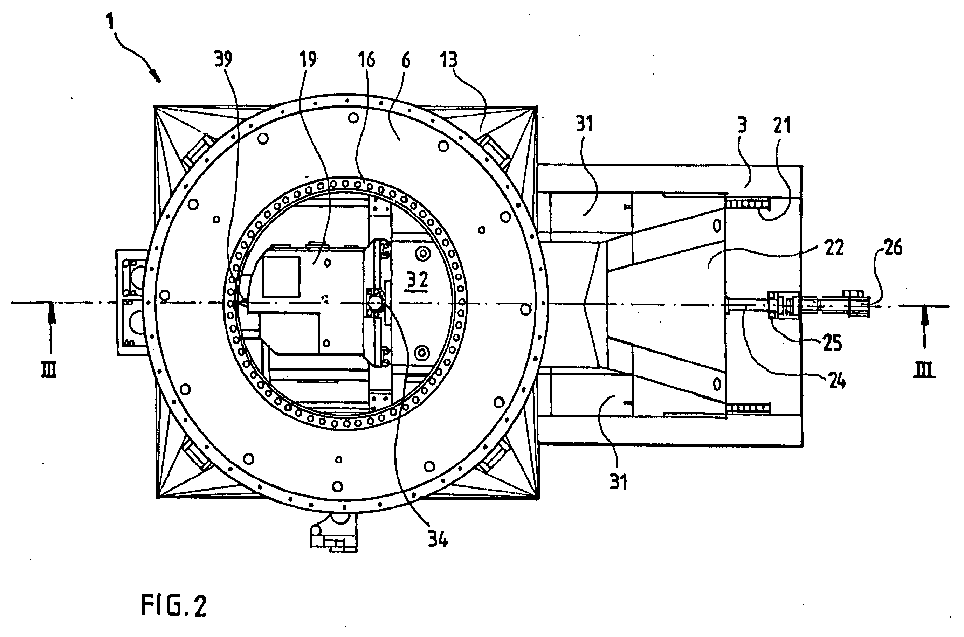

- FIG. 2: eine Draufsicht auf die FIG. 1;
- FIG. 3: einen Schnitt durch die FIG. 2 entlang der Linie III - III; sowie
- FIG. 4: eine vergrößerte Darstellung des Details IV aus FIG. 3.

Die Werkzeugmaschine 1 ruht auf einem Maschinenbett 2 in Form einer massiven Basisplatte, welche auf einem Betonfundament od. dgl. verankert wird, bspw. festgeschraubt. Das Maschinenbett 2 hat eine quadratische Grundfläche, mit einem an einer Seite sich anschließenden Fortsatz 3, vorzugsweise mit einer auf etwa 70 bis 90% reduzierten Breite im Verhältnis zu der Kantenlänge des quadratischen Abschnitts des Maschinenbettes 2. Der Fortsatz 3 soll das horizontale Verfahren eines Schlittens 20 erlauben und ist in seiner Länge daher abhängig von dem geforderten Verfahrweg dieses Schlittens 20 in horizontaler Richtung.

Über dem quadratischen Hauptabschnitt 4 des Maschinenbettes 2 erhebt sich ein mantelförmiger Unterbau 5 für den eigentlichen, drehbar angeordneten Bearbeitungstisch 6. Zu diesem Zweck hat der Unterbau 5 eine kreisringförmige Oberseite 7, worauf mittels einem Drehlager 8 der eigentliche, ebenfalls kreisringförmige Bearbeitungstisch 6 ruht. Der Außendurchmesser der Oberseite 7 entspricht etwa dem Außendurchmesser des Bearbeitungstischs 6.

Die Grundfläche 9 des mantelförmigen Unterbaus 5 entspricht der Grundfläche des Hauptabschnittes 4 des Maschinenbettes 2, so dass der Unterbau mittels das Maschinenbett 2 teilweise durchsetzender Maschinenschrauben festgelegt werden kann. Hierzu sind im unteren Bereich des Unterbaus 5 wie auch in dem Maschinenbett 2 Ausnehmungen 10 vorgesehen, in denen Schraubenköpfe, Muttern oder sonstige Gewindeelemente zugänglich sind.

Der Unterbau 5 könnte aber auch auf dem Maschinenbett 2 festgeschweißt sein.

Zwischen seiner Oberseite 7 und seiner Grundfläche 9 geht der Querschnitt des Unterbaus 5 kontinuierlich und stetig von der etwa zylindrischen Form am oberen Ende in die etwa kastenförmige Gestalt an seinem unteren Ende über. Ein wesentliches Merkmal hierbei ist die etwa konstante Wandstärke in der Größenordnung zwischen 10 cm und 40 cm, vorzugsweise von mehr als 15 cm, insbesondere 20 cm oder mehr, abhängig von den zu erwartenden und abzustützenden Lasten am Bearbeitungstisch. Insbesondere bei größeren Wandstärken empfiehlt es sich, den Unterbau mittels zweier, ineinander angeordneter Hüllen auszuführen mit einem etwa gleichbleibenden Abstand und/oder mit einem sich nach oben evtl. leicht verjüngenden Zwischen- bzw. Hohlraum, worin eine vorzugsweise hydraulisch aushärtende Masse, insbesondere ein schwindungsfrei aushärtender Beton, eingefüllt wird; bei kleineren Wandstärken könnte der Unterbau 5 auch massiv ausgeführt sein. Der Unterbau 5 sollte jedoch in jedem Fall ausreichend schwer, d.h. massereich, sein, um von der Bearbeitung herrührende Schwingungen möglichst optimal dämpfen zu können.

Der kontinuierliche Übergang des Unterbaus 5 von dessen etwa kastenförmigem Fußbereich bis zu seinem etwa zylindrischen Kopfbereich wird dadurch bewirkt, dass der Unterbau 5 sich aus insgesamt acht Abschnitten zusammensetzt.

Hierbei gibt es zum einen insgesamt vier vertikale Wänden 11, welche sich über je einer Seitenkante 12 des quadratischen Hauptabschnitts 4 des Maschinenbettes 2 erheben. Jede Wand 11 hat die Fläche eines gleichschenkligen Dreiecks, dessen Basis der Kantenlänge des quadratischen Hauptabschnitts 4 des Maschinenbettes 2 entspricht, und deren Höhe etwa der Höhe des Unterbaus 5 insgesamt entspricht.

Aufgrund der nach oben hin abnehmenden Breite der Wände 11 ergeben sich in den Eckbereichen zwischen je zwei benachbarten, ebenen Wänden 11 jeweils Lücken, welche sich nach oben erweitern. Die Randlinien benachbarter Wände 11 werden verbunden durch je einen gewölbten Abschnitt 13. Diese gewölbten Abschnitte 13 folgen jeweils einem Abschnitt der Mantelfläche eines auf der Spitze stehenden Kegels, dessen Spitze nicht vertikal über bzw. unter seiner Grundfläche liegt, sondern über dieselbe sozusagen nach außen ragt.

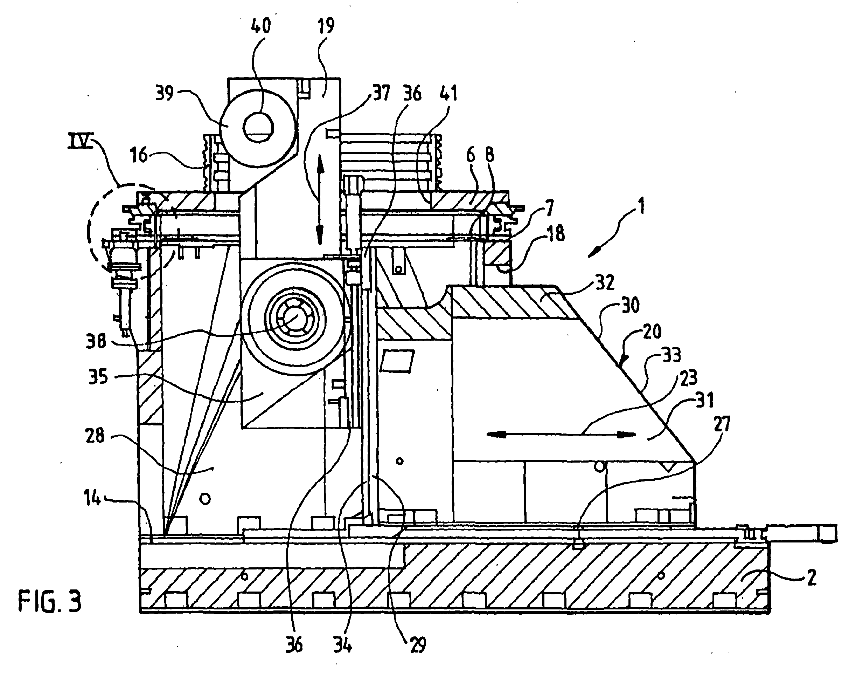

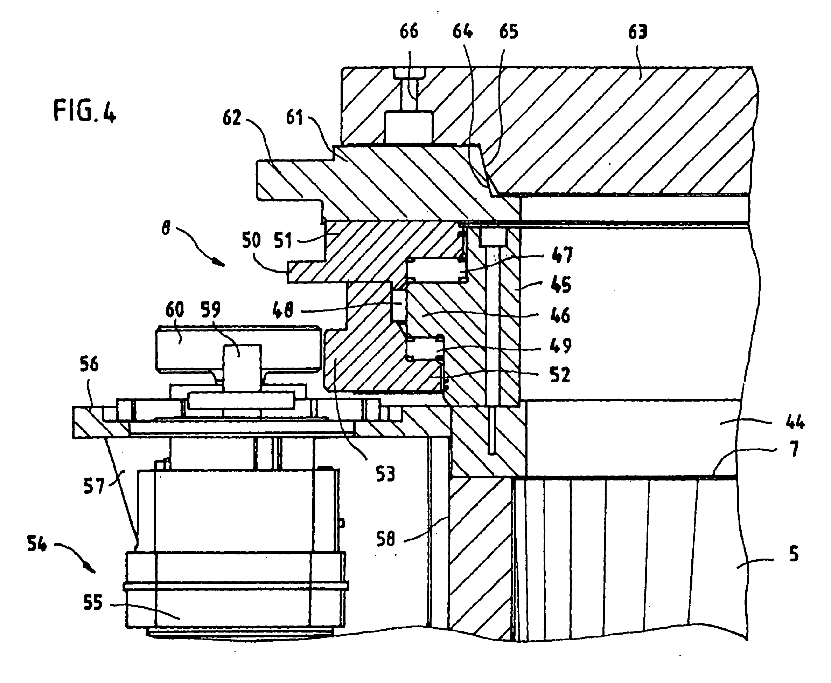

Wie oben bereits angedeutet und in FIG. 3 zu erkennen ist, befindet sich zwischen der kreisförmigen Oberseite 7 des Unterbaus 5 und dem eigentlichen Bearbeitungstisch 6 eine Drehlagerung 8. Die Einzelheiten dieser Drehlagerung 8 sind in FIG. 4 wiedergegeben.

Daraus ergibt sich, dass auf der kreisringförmigen Oberseite 7 des Unterbaus 5 ein Abschlussring 44 aufliegt, vorzugsweise aus massivem Metall.

Darauf ist der Innenring 45 des Drehlagers 8 fixiert, insbesondere mittels einer Vielzahl von kranzförmig angeordneten, zur vertikalen Drehachse der Drehlagerung 8 paralleler Befestigungsschrauben angeschraubt. An dem Außenumfang des Innenrings 45 befindet sich ein bundförmig umlaufender Vorsprung 46 mit einem etwa rechteckigen Querschnitt; dieser Vorsprung 46 ist entlang seiner radial innen liegenden Seite mit dem Innenring 45 verbunden, insbesondere integral hergestellt bzw. zusammen geformt, bspw. aus einem gemeinsamen Ring durch entsprechendes Drehen gearbeitet. Die übrigen drei Seiten des Vorsprungs 46 bilden jeweils eine Lauffläche für je eine von insgesamt drei Reihen von Wälzkörpern 47, 48, 49. Vorzugsweise handelt es sich bei den Wälzkörpern 47, 48, 49 jeweils um Rollen, insbesondere um Zylinderrollen.

Der Außenring 50 der Drehlagerung 8 ist unterteilt in zwei getrennt hergestellte Ringe 51, 52. Die beiden Ringe 51, 52 werden nach ihrer Montage zusammengefügt, insbesondere mittels Schrauben, und weisen dann insgesamt einen etwa C-förmigen Querschnitt auf, d.h., sie greifen im Bereich der Oberseite des oberen Rings 51 einerseits über den Vorsprung 46 des Innenrings 45 und im Bereich der Unterseite des unteren Rings 52 andererseits unter den Vorsprung 46 des Innenrings 45. An den dem Vorsprung 46 zugewandten Seiten des Außenrings 50 befindet sich je eine Laufbahn für die drei Reihen von Wälzkörpern 47, 48, 49.

Von diesen tragen insbesondere die Wälzkörper 47 der obersten Reihe, deren Rotationsachsen etwa radial von der Drehachse der Drehlagerung 8 nach außen weisen, primär das Gewicht des Bearbeitungstisches 6 samt darauf liegenden Werkstücken 16.

Die Rotationsachsen der Wälzkörper 48 der zweiten bzw. - in vertikaler Richtung gesehen - mittleren Reihe sind vertikal ausgerichtet, nach Art eines Radiallagers. Diesen Wälzkörpern 48 obliegt die präzise konzentrische Führung des Bearbeitungstischs 6 gegenüber dem Unterbau 5.

Die Wälzkörper 49 der dritten bzw. untersten Reihe sollen - ggf. in Zusammenwirken mit den oberen Wälzkörpern 47 - Kippmomente aufnehmen und dadurch auch während einer Bearbeitung stets eine exakte Horizontallage des Bearbeitungstischs 6 samt darauf liegender Werkstücke 16 sicherstellen.

Zum Drehantrieb des Bearbeitungstisches 6 befindet sich an dem Außenring 50 - vorzugsweise an dessen unterem Teil 52 - ein vorzugsweise radial erweiterter Bereich 53 mit einer Außenverzahnung. Mit dieser Außenverzahnung kämmt ein mit einer Verzahnung versehenes Abtriebselement wenigstens eines Antriebs 54.

Der (jeder) Antrieb 54 umfasst wenigstens (je) einen Elektromotor 55, der an einem nach außen ragenden, plattenförmigen Fortsatz 56 am Außenumfang des Abschlussringes 44 mit horizontaler Grundfläche befestigt, insbesondere angeschraubt, ist. Vorzugsweise wird dieser plattenförmige Fortsatz 56 mit horizontaler Grundfläche unterstützt durch eine Platte 57, mit vertikaler, bspw. mehreckiger, vorzugsweise drei- oder viereckiger, insbesondere trapezförmiger Grundfläche. Diese ist mit einer (Längs-) Seite 58 stumpf an der Außenseite des Unterbaus 5, insbesondere im Bereich einer Seitenmitte desselben, angesetzt, insbesondere angeschweißt, während ihre obere Seite etwa rechtwinklig dazu, d.h. horizontal, verläuft und mit dem plattenförmigen Fortsatz 56 in stützendem Kontakt steht, vorzugsweise mit jenem verbunden ist, insbesondere verschweißt oder verschraubt.

Dabei ist die Anordnung derart getroffen, dass der (jeder) Antrieb 54 über eine vertikal nach oben ragende Abtriebswelle 59 verfügt, auf der ein Zahnrad 60 drehfest fixiert ist, welches mit der Außenverzahnung an dem radial erweiterten Bereich 53 des Außenrings 50 in kämmendem Eingriff steht. Durch Drehverstellung dieses Zahnrades 60 kann der Bearbeitungstisch 6 gedreht werden. Zwischen dem Elektromotor 55 und dem Zahnrad 60 kann ein (Untersetzungs-) Getriebe geschalten sein, um die Drehzahl des Elektromotors 55 optimal an die gewünschte Drehgeschwindigkeit des Bearbeitungstischs 6 anzupassen; dies kann allerdings auch auf elektronischem Weg bewirkt werden, bspw. durch Ansteuerung des Elektromotors 55 über einen Umrichter. Mit einer derartigen Steuereinrichtung kann nicht nur die Drehzahl des Elektromotors 55 gesteuert oder geregelt werden, sondern evtl. auch dessen Lage bzw. Drehstellung, um mit dem Bearbeitungstisch ganz gezielt bestimmte Drehstellungen bzw. Bearbeitungspositionen anfahren zu können, was für gleichbleibende Abstände zwischen den einzelnen Zähnen des Werkstücks 16 sehr wichtig ist. Für eine Lageregelung kann bspw. an der Abtriebswelle 59 des Elektromotors 55 ein Lagegeber, bspw. ein Inkrementalgeber, Resolver od. dgl., angeordnet sein. Natürlich könnte alternativ dazu auch die Drehstellung des Bearbeitungstisches 6 selbst gemessen werden, bspw. mittels eines an der Außen- oder Innenseite des Lageraußenrings 50 angeklebten oder anderweitig fixierten (Inkremental-) Maßstabes.

Auf der Oberseite des Außenrings 50 liegt ein Adaptionsring 61 auf, der drehfest mit dem Außenring 50 verbunden ist, insbesondere durch eine Reihe von kranzförmig verteilt angeordneten Verbindungsschrauben.

Am Außenumfang des Adaptionsrings 61 befindet sich ein scheibenförmiger Ansatz 62, welcher zwischen den Bremsbacken einer oder mehrerer Feststellbremse(n) läuft. Die - vorzugsweise in gleichen Abständen von bspw. je 90° über den Umfang des Bearbeitungstisches 6 verteilten - Feststellbremsen sind am Unterbau 5 festgelegt. Sie können elektrisch oder hydraulisch betätigt werden, um den Bearbeitungstisch 6 nach Einstellung einer gewünschten Bearbeitungsposition unverrückbar mit dem Unterbau 5 zu verbinden. Vor jeder Drehverstellung des Bearbeitungstisches 6 mittels des Antriebs/der Antriebe 54 werden die Feststellbremsen gelöst.

Der Adaptionsring 61 bietet einen genormten Anschluss für einen von wenigstens zwei darauf auflegbaren, werkstückspezifischen Bearbeitungsring 63. Beide Ringe 61, 63 sind selbstzentrierend, indem sie im Bereich ihrer gegenseitigen Anlageflächen jeweils konisch gearbeitete Flächen 64, 65 aufweisen. Vorzugsweise befindet sich nahe der Innenseite des Adaptionsrings 61 ein Innenkonus 64 und an einer damit korrespondierenden Position des werkstückspezifischen Bearbeitungsringes 63 ein dazu komplementärer Außenkonus 65. Ferner weist der Adaptionsring 61 in seiner ebenen Oberseite eine große Anzahl - bspw. 16 - von kranzförmig angeordneten Befestigungsbohrungen auf, welche zum Anschrauben eines aufgelegten, werkstückspezifischen Bearbeitungsrings 63 dienen.

Unterschiedliche Bearbeitungsringe 63 sind insbesondere hinsichtlich ihres Innendurchmessers - ggf. aber auch hinsichtlich ihrer Tragkraft bzw. Stärke - an unterschiedliche Werkstücke angepasst. Zur Verbindung mit einem oder mehreren, ggf. aufeinandergestapelten Werkstücken verfügen sie an ihrer Oberseite über Aufnahmen 66 für Befestigungsmittel, bspw. in Form von durch Anschlussbohrungen der Werkstücke 16 gesteckter Gewindestäbe. Die Aufnahmen 66 können hierzu mit Innengewinde versehen sein.

In der Oberseite 14 des quadratischen Hauptabschnitts 4 des Maschinenbettes 2 ist eine rinnenförmige Vertiefung 15 eingearbeitet. Darin kann bspw. ein Förderband angeordnet sein, dessen Aufgabe darin besteht, innerhalb des Unterbaus 5 von der spanenden Bearbeitung eines Werkstücks 16 herabfallende Späne abzutransportieren. Zu diesem Zweck ist die Rinne 15 an einer Seite des Maschinenbettes 2, vorzugsweise der Ansatzplatte 3 diametral gegenüberliegend, bis zur Außenseite herausgeführt. An dieser Stelle ist die notwendige Durchbrechung in dem Unterbau nach Art eines Durchgangs 17 erweitert, der es einer Person erlaubt, den Innenraum des Unterbaus 5 zu betreten.

Im Bereich des Ansatzes 3 an dem quadratischen Hauptabschnitt 4 des Maschinenbettes 2 ist dagegen eine torartige Öffnung 18 in dem Unterbau 5 vorgesehen, um das Hindurchtreten eines den Bearbeitungskopf 19 tragenden Schlittens 20 zu ermöglichen.

Zur Führung dieses Schlittens 20 sind an der Oberseite des Maschinenbettes 2 zwei zueinander parallele Schienen 21 angeordnet, welche von dem Hauptabschnitt 4 des Maschinenbettes 2 bis zu deren Ansatz 3 verlaufen und vorzugsweise einen bspw. schwalbenschwanzförmig hinterschnittenen Querschnitt aufweisen.

Der Schlitten 20 wird entlang dieser Schienen 21 geführt durch mehrere Führungselemente an der Unterseite seiner etwa rechteckigen Bodenplatte 22, deren Querschnitt etwa komplementär zu dem Schienenquerschnitt gestaltet ist, vorzugsweise derart, dass die Schienen 21 an ihrer Oberseite von den Führungselementen umgriffen werden.

Zum Verfahren 23 des Schlittens 20 in Richtung seiner Führungsschienen 21 erstreckt sich zwischen denselben zwischen der Basisplatte 2-4 einerseits und der Bodenplatte 22 des Schlittens 20 eine Spindel 24, die in wenigstens einem Lager 25 des Maschinenbettes 2, insbesondere an deren Ansatz 3, drehbar gelagert und mit einem Anschluss 26 zur Ankopplung eines Motors versehen ist. An der Unterseite des Schlittens 20, insbesondere an der Unterseite seiner Bodenplatte 22, ist eine Spindelmutter 27 festgelegt, in welche die Spindel 24 eingeschraubt ist. Durch motorische Rotation der Spindel 24 schraubt sich die Spindelmutter 27 an der in Axialrichtung unverschiebbar gelagerten 25 Spindel 26 entlang und teilt den Versatz in Richtung der Schienen 21, welchen sie dabei erfährt, dem Schlitten 20 mit. Je nach Drehrichtung der Spindel 26 bewegt sich der Schlitten 20 dabei entweder durch die Toröffnung 18 des Unterbaus 5 in dessen Innenraum 28 hinein oder aus diesem heraus. Dies ist möglich, weil ein Vertikalschnitt durch den Schlitten 20 quer zu dessen Vorschubrichtung 23 kleiner ist als der Querschnitt der Toröffnung 18, so dass der Schlitten 20 ohne anzuecken durch diese hindurch passt.

Auf der Bodenplatte 22 des Schlittens 20 erhebt sich dessen Aufbau, bestehend aus einer dem Innenraum 28 zugewandten, aufrechten, vorderen Querwand 29 und einer rückwärtigen Stützkonstruktion 30. Die Stützkonstruktion 30 wird gebildet durch zwei in Richtung der Schienen 21 verlaufende Stützwände 31, welche von der Bodenplatte 22 des Schlittens 20 bis zu einer oberseitigen, dachartigen Verbindung 32 aufeinander zu konvergieren. Zur Reduzierung des Gesamtgewichts kann die rückwärtige Stirnseite 33 der beiden Stützwände 31 abgeschrägt verlaufen, bspw. unter einem Winkel zwischen 30° bis 60° gegenüber der Vertikalen.

Die aufrechte, vordere Querwand 29 trägt an ihrer der Stützkonstruktion 30-33 abgewandten Vorderseite zwei zueinander parallele, vertikale Führungsschienen mit einer verdrehbar gelagerten Spindel 34 mit einer vertikalen Längsachse dazwischen. Zur motorischen Verdrehung der vertikalen Spindel 34 dient ein daran drehfest gekoppelter Antriebsmotor, dessen Gehäuse auf der Oberseite der Bodenplatte 22 des horizontal verfahrbaren Schlittens 20 festgelegt sein kann.

Ein Fräskopf 35 verfügt über eine zu der Querwand 29 parallele Rückwand 36 mit dieser Querwand 29 zugeordneten Führungselementen zur vertikal verschiebbaren Führung gegenüber der Querwand 29. Eine Spindelmutter 36 schraubt sich bei Rotation der vertikalen Spindel 34 an dieser auf oder ab und überträgt seine Vertikalbewegung 37 auf den Vertikalschlitten 35.

Der Fräskopf 35 ist derart bemessen, dass um einen Horizontalschnitt durch diesen ein Umkreis gelegt werden kann, dessen Durchmesser deutlich kleiner ist als der Durchmesser der lichten Ausnehmung 41 in dem Bearbeitungstisch 6, bspw. nur 0,8 mal so groß oder noch kleiner, insbesondere nur 0,6 mal so groß oder darunter. Daraus ergibt sich ein ausreichender Bewegungsspielraum in horizontaler Richtung, innerhalb desselben weder der Unterbau 5 noch der Bearbeitungstisch 6 das horizontale Verfahren des Bearbeitungskopfs 19 in Richtung der Schienen 21 behindern.

Der Bearbeitungskopf 19 trägt ein Schneidwerkzeug zur spanenden Bearbeitung der Innenseite eines oder mehrerer, vorzugsweise gleichartiger und ggf. übereinander aufgespannter Werkstücke 16. Bevorzugt wird dabei ein Fräser 39, der um eine Drehachse 40 rotiert, vgl. Pfeil 42, die rechtwinklig zu den beiden Schlittenvorschubrichtungen 23, 37 orientiert ist.

Das bevorzugte Herstellungsverfahren ist das Profilfräsen einzelner Zahnlücken mittels eines Scheibenfräsers 39, dessen Schneiden einem Verlauf entsprechend den einzufräsenden Zahnlücken folgen; vorzugsweise sind die Schneiden des Scheibenfräsers 39 an dessen Umfang bzw. Mantelseite angeordnet und erstrecken sich gemäß dem Profil der herzustellenden Verzahnung bzw. Zahnlücke auch entlang der Übergangsbereiche zu den beiden Stirnseiten des Scheibenfräsers 39. Mit der Hubbewegung 37 wird das rotierende Werkzeug 39 langsam durch die Innenseite eines Werkstücks 16 gezogen, so dass auch mehrere, aufeinandergeschichtete Werkstücke 16 in einem Arbeitsgang bearbeitet werden können. Nach Fertigstellung einer Zahnlücke wird der Fräser 39 aus der soeben hergestellten Zahnlücke herausgefahren, wobei der gesamte Schlitten 20 in horizontaler Richtung 23 verfahren wird; sodann wird der Bearbeitungstisch 6 samt Werkstück(en) 16 um eine Zahnteilung weiter gedreht in Richtung des Pfeils 43 und dann wieder stillgesetzt. Nachdem der Scheibenfräser 39 mittels des Schlittens 20 wieder an die Innenseite eines Werkstücks 16 herangefahren wurde, beginnt mit dem Einleiten der Hubbewegung 37 der Fräsvorgang für die nächste Zahnlücke.

Denkbar wären allerdings auch andere Herstellungsverfahren wie bspw. Wälzfräsen oder Stoßen. Solchenfalls wäre nur der Bearbeitungskopf 19 zu modifizieren sowie ggf. das Programm zur Ansteuerung und Koordination der verschiedenen Antriebe.

### Bezugszeichenliste

| | |
|---|---|
| 1 | Werkzeugmaschine |
| 2 | Maschinenbett |
| 3 | Ansatz |
| 4 | Hauptabschnitt |
| 5 | Unterbau |
| 6 | Bearbeitungstisch |
| 7 | Oberseite |
| 8 | Lager |
| 9 | Unterseite |
| 10 | Ausnehmung |
| 11 | Wand |
| 12 | Seitenkante |
| 13 | gewölbter Abschnitt |
| 14 | Oberseite |
| 15 | Rinne |
| 16 | Werkstück |
| 17 | Durchgang |
| 18 | Öffnung |
| 19 | Bearbeitungskopf |
| 20 | Schlitten |
| 21 | Schienen |
| 22 | Bodenplatte |
| 23 | Verfahren |
| 24 | Spindel |
| 25 | Lager |
| 26 | Anschluss |
| 27 | Spindelmutter |
| 28 | Innenraum |
| 29 | Vorderwand |
| 30 | Stützkonstruktion |
| 31 | Stützwand |
| 32 | dachartige Verbindung |
| 33 | Stirnseite |
| 34 | Spindel |
| 35 | Schlitten |
| 36 | Gewindeelement |
| 37 | Vertikalbewegung |
| 38 | Antrieb |
| 39 | Fräser |
| 40 | Drehachse |
| 41 | Ausnehmung |
| 42 | Pfeil |
| 43 | Pfeil |
| 44 | Abschlussring |
| 45 | Innenring |
| 46 | Vorsprung |
| 47 | Wälzkörper |
| 48 | Wälzkörper |
| 49 | Wälzkörper |
| 50 | Außenring |
| 51 | oberer Ring |
| 52 | unterer Ring |
| 53 | radial erweiterter Bereich |
| 54 | Antrieb |
| 55 | Elektromotor |
| 56 | plattenförmiger Fortsatz |
| 57 | vertikale Platte |
| 58 | Seite |
| 59 | Abtriebswelle |
| 60 | Zahnrad |
| 61 | Adaptionsring |
| 62 | scheibenförmiger Ansatz |
| 63 | Bearbeitungsring |
| 64 | Innenkonus |
| 65 | Außenkonus |
| 66 | Aufnahme |

## Patentansprüche

1. Werkzeugmaschine (1) zum spanenden Einarbeiten einer Verzahnung in die Innenseite eines ringförmigen Werkstücks (16), mit
a) einem ringförmigen Bearbeitungstisch (6) zum Abstützen oder Auflegen wenigstens eines Werkstücks (16), sowie
b) einem Chassis (19, 20, 35) zum Halten, Stützen, Lagern und/oder Führen eines Werkzeugkopfs (19, 39), welches Chassis (19, 20, 35) sich zumindest während der Bearbeitung von einem Bett (2-4) oder Fundament unterhalb des Bearbeitungstischs (6) durch den ringförmigen Bearbeitungstisch (6) oder durch eine zentrale Öffnung des ringförmigen Bearbeitungstisches (6) hindurch erstreckt,
c) wobei an einem Ring (45,50) des Drehlagers (8), insbesondere an dessen Außenring (50), ein Adaptionsring (61) des Bearbeitungstisches (6) festgelegt ist, **dadurch gekennzeichnet, dass**
d) wenigstens zwei konzentrisch auf den Adaptionsring (61) auflegbare, jeweils an unterschiedliche Werkstücke (16) angepasste, unterschiedliche Bearbeitungsringe (63) zum Abstützen unterschiedlicher zu bearbeitender Werkstücke (16) vorgesehen sind, und
e) an dem Adaptionsring (61) einerseits sowie an den wenigstens zwei Bearbeitungsringen (63) andererseits konzentrische Führungsflächen (64, 65) vorgesehen sind.

2. Werkzeugmaschine nach Anspruch 1, bei der der Bearbeitungstisch (6) um eine vertikale Symmetrieachse rotierbar gelagert ist und bei der der Bearbeitungstisch (6) an der Oberseite (7) eines, vorzugsweise etwa mantelförmigen, Unterbaus (5) gelagert ist.

3. Werkzeugmaschine nach Anspruch 2, bei der der Unterbau (5) für den Bearbeitungstisch (6) im Bereich seiner Oberseite (7) einen etwa kreisringförmigen Querschnitt oder eine wenigstens annähernd kreisförmige Außenkontur im Querschnitt aufweist-oder bei der der Unterbau (5) für den Bearbeitungstisch (6) im Bereich seiner dem Maschinenbett- oder -fundament zugewandten oder auf dem Maschinenbett- oder -fundament angeordneten Basis (2,4) einen etwa oder wenigstens annähernd polygonalen, vorzugsweise viereckigen oder rechteckigen, insbesondere etwa quadratischen, Querschnitt oder eine etwa oder wenigstens annähernd polygonale, insbesondere viereckige oder rechteckige, insbesondere etwa quadratische, Außenkontur im Querschnitt aufweist, wobei insbesondere wenigstens zwei parallele Kanten des rechteckigen oder quadratischen Querschnitts parallel zu oder in Richtung einer zugehörigen Verschieberichtung einer Verschiebebewegung oder zugehöriger Führungselemente oder Führungsschienen für eine Verschiebebewegung des Chassis für den Werkzeugkopf angeordnet sind oder verlaufen.

4. Werkzeugmaschine nach Anspruch 2 oder Anspruch 3, bei der sich der Querschnitt oder die Außenkontur des Unterbaus (5) für den Bearbeitungstisch (6) zwischen seiner Oberseite (7) und seiner Basis (2,4) stetig ändert und bei der die wenigstens annähernd kreisförmige Außenkontur des Unterbaus und/oder des Querschnitts des Unterbaus an dessen Oberseite, insbesondere stetig, in die viereckige oder rechteckige, insbesondere quadratische, Außenkontur des Unterbaus und/oder dessen Querschnitts an dessen Basis übergeht.

5. Werkzeugmaschine nach Anspruch 4, bei der die Kantenlänge des Quadrats an der Basis des Unterbaus dem Durchmesser des Kreises an der Oberseite des Unterbaus entspricht und/oder der Kreis an der Oberseite des Unterbaus in der Projektion auf die Basis einen eingeschriebenen Kreis in dem Quadrat an der Basis des Unterbaus, bildet und/oder denselben Mittelpunkt wie das Quadrat aufweist und die Seitenkanten des Quadrats in deren Mitte tangential berührt.

6. Werkzeugmaschine nach Anspruch 4 oder Anspruch 5, bei der die Wandung oder Außenfläche des Unterbaus
(i) im Bereich von vier, jeweils um 90° gegeneinander versetzten äußeren Stellen an der wenigstens annähernd kreisförmigen Oberseite wenigstens annähernd vertikal oder unter einem maximalen Steigungswinkel bis zu der Basis des Unterbaus verläuft, insbesondere jeweils zu der Seitenmitte jeweils einer von vier Kanten der rechteckigen oder quadratischen Basis,
(ii) im Bereich von vier weiteren inneren Stellen an der wenigstens annähernd kreisförmigen Oberseite, die jeweils zwischen zwei der äußeren Stellen liegen, unter wenigstens einem minimalen Steigungswinkel bis zu der Basis des Unterbaus verläuft, insbesondere jeweils zu einem zugehörigen Eck der rechteckigen oder quadratischen Basis, und
(iii) zwischen den äußeren Stellen und den inneren Stellen unter variierenden Steigungswinkeln zwischen dem maximalen Steigungswinkel und dem minimalen Steigungswinkel verläuft.

7. Werkzeugmaschine nach Anspruch 4 oder Anspruch 5, bei der die Wandung oder Außenfläche des Unterbaus vier ebene und vertikale, Wandabschnitte oder Seitenwände, welche an der Basis des Unterbaus oder Mantels auf den Kanten des dortigen Vierecks bzw. Quadrats aufsetzen, einerseits und aus vier die vier ebenen und vertikalen Wandabschnitte oder Seitenwände miteinander verbindende Wölbungsabschnitte oder gekrümmte, vorzugsweise konvex gekrümmte Zwischenwände aufweist, wobei sich die Wölbungsabschnitte oder gekrümmten Zwischenwände einerseits zur Basis hin verjüngen oder punktförmig in deren Ecken münden oder sich nach oben zur Oberseite hin erweitern-oder im Bereich der Oberseite zusammentreffen bzw. ineinander übergehen
oder
bei der die Seitenwände sich bis zu einer Spitze an der Oberseite des Unterbaus hin verjüngen.

8. Werkzeugmaschine nach Anspruch 4, Anspruch 5 oder Anspruch 7, bei der sich die Mantelfläche oder Außenfläche des Unterbaus aus abwechselnd aneinandergereihte, aufrecht stehende, vorzugsweise gleichschenklige, Dreiecksabschnitten und dazwischen jeweils einem Abschnitt eines auf der Spitze stehenden, vorzugsweise schiefen, Kegels zusammensetzt, wobei jeweils eine Randlinie eines Dreieckabschnitts mit einer Randlinie eines Kegelabschnitts zusammenfallen.

9. Werkzeugmaschine nach einem der vorhergehenden Ansprüche, bei der die Wandstärke des Unterbaus (5) größer ist als 10 cm, vorzugsweise größer als 15 cm, insbesondere größer als 20 cm, oder bei der die Wandstärke des Unterbaus (5) kleiner ist als 50 cm, vorzugsweise kleiner als 45 cm, insbesondere kleiner als 40 cm,
und
bei der an der Oberseite (7) des Unterbaus (5) ein massiver Abschlussring (44) festgelegt ist
und
bei der ein Ring (45,50) eines Drehlagers (8) an einem Abschlussring (44) an der Oberseite (7) des Unterbaus (5) festgelegt ist, insbesondere der Innenring (45),
und
bei der als Drehlager (8) ein Rollenlager vorgesehen ist, das vorzugsweise mehrreihig ausgeführt ist, insbesondere mit drei Reihen von Wälzkörpern (47,48,49)
und
bei der an einem gegenüber dem Unterbau (5) verdrehbaren Ring (45,50) des Drehlagers (8) eine rundumlaufende Verzahnung vorgesehen ist, womit ein angetriebenes oder antreibbares, verzahntes Element, insbesondere ein Zahnrad (60), ein Ritzel oder eine Schnecke, kämmt (-en).

10. Werkzeugmaschine nach einem der vorhergehenden Ansprüche, bei der die konzentrischen Führungsflächen in Form eines Innenkonus (64) und eines Außenkonus (65) ausgebildet sind, wodurch insbesondere der Adaptionsring (61) und der Bearbeitungsring (63) selbst zentrierend sind.

11. Werkzeugmaschine nach einem der vorhergehenden Ansprüche, bei der der Adaptionsring (61) in seiner ebenen Oberseite eine große Anzahl von kranzförmig angeordneten Befestigungsbohrungen aufweist, welche zum Anschrauben eines aufgelegten, werkstückspezifischen Bearbeitungsrings (63) dienen.

12. Werkzeugmaschine nach einem der vorhergehenden Ansprüche, bei der unterschiedliche Bearbeitungsringe (63) hinsichtlich ihres Innendurchmessers an unterschiedliche Werkstücke angepasst sind und/oder zur Verbindung mit einem oder mehreren, ggf. aufeinandergestapelten Werkstücken an ihrer Oberseite über Aufnahmen (66) für Befestigungsmittel, beispielsweise in Form von durch Anschlussbohrungen der Werkstücke (16) gesteckter Gewindestäbe, verfügen, wobei die Aufnahmen (66) hierzu mit Innengewinde versehen sein können.

13. Werkzeugmaschine nach einem der vorhergehenden Ansprüche, **gekennzeichnet durch** wenigstens eine Bremseinrichtung zum Festbremsen des Bearbeitungstisches (6), die vorzugsweise mit hydraulisch oder elektrisch anstellbaren Bremsbacken ausgestattet ist, wobei insbesondere die (jede) Bremseinrichtung auf den Adaptionsring (61) einwirkt, insbesondere auf einen radial nach außen vorspringenden, rundumlaufenden Bund (62).

14. Werkzeugmaschine nach einem der vorhergehenden Ansprüche, bei der das Chassis (19,20,35) zum Halten, Stützen, Lagern und/oder Führen eines Werkzeugkopfs (19,39) einen horizontal verfahrbaren Schlitten (20) aufweist, wobei insbesondere der horizontal verfahrbare Schlitten (20) an dem Maschinenbett (2-4) oder -fundament geführt ist, insbesondere über Führungsschienen (21),
und
bei der das Chassis (19, 20, 35) zum Halten, Stützen, Lagern und/oder Führen eines Werkzeugkopfs (19, 39) einen vertikal verfahrbaren Schlitten (35) aufweist.

15. Werkzeugmaschine nach Anspruch 14, bei der der vertikal verfahrbare Schlitten (35) an dem horizontal verfahrbaren Schlitten (20) geführt ist und wobei der vertikal verfahrbare Schlitten (35) als Fräskopf (19, 39) ausgebildet ist oder einen Fräskopf (19, 39) aufweist, wobei insbesondere der Fräskopf oder das Fräswerkzeug (39) um eine insbesondere horizontale Drehachse (40) drehbar gelagert ist, wobei insbesondere die Drehachse (40) des Fräswerkzeugs (39), die Verschieberichtung (37) des vertikal verfahrbaren Schlittens (35) und die Verschieberichtung (23) des horizontal verfahrbaren Schlittens (20) jeweils rechte Winkel miteinander einschließen.

## Claims

1. Machine tool (1) for incorporating gear teeth into the inner side of an annular workpiece (16) by machining, comprising:
a) an annular machining table (6) for supporting or placing on at least one workpiece (16), and
b) a chassis (19, 20, 35) for holding, supporting, mounting and/or guiding a tool head (19, 39), which chassis (19, 20, 35) extends, at least during the machining, through the annular machining table (6) or through a central opening in the annular machining table (6) from a bed (2-4) or pedestal below the machining table (6),
c) wherein an adaption ring (61) of the machining table (6) is fixed to a ring (45, 50) of the rotary bearing (8), in particular to its outer ring (50), **characterized in that**
d) there are provided at least two different machining rings (63) for supporting a workpiece (16) to be machined, which machining rings (63) are adapted to different workpieces (16) and can be placed concentrically onto the adaption ring (61), and
e) concentric guiding surfaces (64, 65) are provided on the adaption ring (61), on the one hand, as well as on the at least two machining rings (63), on the other hand.

2. Machine tool according to claim 1, wherein the machining table (6) is mounted rotatably about a vertical axis of symmetry, and in which the machining table (6) is mounted on the upper side (7) of a substructure (5), preferably approximately in the form of a lateral surface.

3. Machine tool according to claim 2, wherein the substructure (5) for the machine table (6) has in the region of its upper side (7) a cross section approximately in the form of a circular ring or an at least almost circular outer contour in cross section or in which preferably the substructure (5) for the machining table (6) has in the region of its base (2, 4), facing the machine bed or pedestal or arranged on the machine bed or pedestal, an approximately or at least almost polygonal, preferably quadrangular or rectangular, in particular approximately square, cross section or an approximately or at least almost polygonal, in particular quadrangular or rectangular, in particular approximately square, outer contour in cross section, wherein preferably at least two parallel edges of the rectangular or square cross section are arranged or extend parallel to or in the direction of an associated direction of displacement of a displacement movement or associated guiding elements or guiding rails for a displacement movement of the chassis for the tool head.

4. Machine tool according to claim 2 or claim 3, wherein the cross section or the outer contour of the substructure (5) for the machining table (6) steadily changes between an upper side (7) and its base (2, 4), and wherein the at least almost circular outer contour of the substructure and/or of the cross section of the substructure on its upper side goes over, in particular steadily, into the quadrangular or rectangular, in particular square, outer contour of the substructure and/or its cross section at its base.

5. Machine tool according to claim 4, wherein the edge length of the square at the base of the substructure corresponds to the diameter of the circle at the upper side of the substructure and/or the circle at the upper side of the substructure forms in the projection onto the base an inscribed circle in the square at the base of the substructure and/or has the same center point as the square and tangentially touches the side edges of the square at their midpoint.

6. Machine tool according to claim 4 or claim 5, wherein the wall or outer area of the substructure
(i) extends at least almost vertically or at a maximum angle of slope in the region of four outer points on the at least almost circular upper side that are respectively offset by 90° from one another to the base of the substructure, in particular in each case to the side midpoint respectively of one of four edges of the rectangular or square base,
(ii) extends at at least a minimum angle of slope in the region of four further inner points on the at least almost circular upper side that lie respectively between two of the outer points to the base of the substructure, in particular in each case to an associated corner of the rectangular or square base, and
(iii) extends at varying angles of slope, between the maximum angle of slope and the minimum angle of slope, between the outer points and the inner points.

7. Machine tool according to claim 4 or claim 5, wherein the wall or outer area of the substructure has four planar and vertical wall portions or side walls, which at the base of the substructure or lateral surface meet the edges of the quadrangle or square there, and four vaulted portions or curved, preferably convexly curved, intermediate walls that join the four planar and vertical wall portions or side walls to one another, wherein the vaulted portions or curved intermediate walls narrow toward the base or end in the form of a point in its corners or widen upwardly toward the upper side or come together in the region of the upper side, or merge with one another, or in which the side walls narrow to a point at the upper side of the substructure.

8. Machine tool according to claim 4, claim 5 or claim 7, wherein the lateral area or outer area of the substructure is made up of an alternating succession of upright, preferably isosceles, triangle portions and, in between in each case, a portion of an inverted, preferably oblique, cone, an edge line of a triangle portion respectively coinciding with an edge line of a cone portion.

9. Machine tool according to one of the preceding claims, wherein the wall thickness of the substructure (5) is greater than 10 cm, preferably greater than 15 cm, in particular greater than 20 cm, or wherein the wall thickness of the substructure (5) is less than 50 cm, preferably less than 45 cm, in particular less than 40 cm,
and
wherein a solid terminating ring (44) is fixed to the upper side (7) of the substructure (5)
and
wherein a ring (45, 50) of a rotary bearing (8) is fixed to a terminating ring (44) on the upper side (7) of the substructure (5), in particular the inner ring (45)
and
wherein a roller bearing, which is preferably of a multi-row configuration, in particular with three rows of rolling bodies (47, 48, 49), is provided as the rotary bearing (8)
and
wherein peripheral teeth are provided on a ring (45, 50) of the rotary bearing (8) that is rotatable with respect to the substructure (5), with which a toothed element that is driven or can be driven, in particular a gear wheel (60), a pinion or a worm, mesh(es).

10. Machine tool according to one of the preceding claims, wherein the concentric guiding areas are provided in the form of an inner cone (64) and an outer cone (65), wherein in particular the adaption ring (61) and the machining rings (63) are self-centering.

11. Machine tool according to one of the preceding claims, wherein the adaption ring (61) has in its planar upper side a large number of fastening bores arranged in the form of a ring, which serve for screwing on a placed-on, workpiece-specific machining ring (63).

12. Machine tool according to one of the preceding claims, wherein different machining rings (63) are adapted with regard to their inside diameter to different workpieces and/or are provided with upper side receptacles (66) for fastening means for the connection to one or more workpieces, possibly stacked one above the other, for example in the form of threaded rods inserted through connection bores, wherein the receptacles (66) may be provided with an internal thread.

13. Machine tool according to one of the preceding claims, **characterized by** at least one braking device for arresting the machining table (6), which is preferably equipped with hydraulically or electrically movable brake shoes, wherein preferably the (each) braking device acts on the adaption ring (61), in particular on a radially outwardly projecting, peripheral collar (62).

14. Machine tool according to one of the preceding claims, wherein the chassis (19, 20, 35) for holding, supporting, mounting and/or guiding a tool head (19, 39) comprises a horizontally movable carriage (20), wherein in particular the horizontally movable carriage (20) is guided on the machine bed (2-4) or pedestal, especially by means of guiding rails (21),
and
wherein the chassis (19, 20, 35) for holding, supporting, mounting and/or guiding a tool head (19, 39) comprises a vertically movable carriage (35).

15. Machine tool according to one of the preceding claims, wherein the vertically movable carriage (35) is guided on the horizontally movable carriage (20) and wherein the vertically movable carriage (35) is formed as a milling head (19, 39) or comprises a milling head (19, 39), wherein in particular the milling head or the milling tool (39) is mounted rotatably about an axis of rotation (40), in particular a horizontal axis of rotation (40), wherein especially the axis of rotation (40) of the milling tool (39), the direction of displacement (37) of the vertically movable carriage (35) and the direction of displacement (23) of the horizontally movable carriage (20) respectively form right angles to one another.

## Revendications

1. Machine-outil (1) pour l'incorporation par usinage d'une denture dans la face intérieure d'une pièce à usiner (16) annulaire, comportant
a) une table d'usinage annulaire (6) pour soutenir ou déposer au moins une pièce à usiner (16), et
b) un châssis (19, 20, 35) pour maintenir, supporter, loger et/ou guider une tête d'outil (19, 39), lequel châssis (19, 20, 35) avance, au moins durant l'usinage, à partir d'un bâti (2-4) ou d'un socle en dessous de la table d'usinage (6) et traverse la table d'usinage (6) annulaire ou un orifice central de la table d'usinage (6) annulaire,
c) où une bague d'adaptation (61) de la table d'usinage (6) est fixée sur une bague (45, 50) du coussinet de pivotement (8), en particulier au niveau de sa bague extérieure (50), **caractérisée en ce que**
d) au moins deux différentes bagues d'usinage (63), adaptées respectivement à différentes pièces à usiner (16), susceptibles d'être posées de manière concentrique sur la bague d'adaptation (61), sont prévues pour soutenir différentes pièces qui doivent être usinées, et
e) des surfaces de guidage (64, 65) concentriques sont prévues d'une part sur la bague d'adaptation (61) ainsi que, d'autre part, au moins sur les deux bagues d'usinage (63).

2. Machine-outil selon la revendication 1, **caractérisée en ce que** la table d'usinage (6) est montée à rotation autour d'un axe symétrique vertical et **en ce que** la table d'usinage (6) est logée sur la face supérieure (7) d'une substructure (5) de préférence approximativement en forme d'enveloppe.

3. Machine-outil selon la revendication 2, **caractérisée en ce que** la substructure (5) pour la table d'usinage (6) présente au niveau de sa face supérieure (7) une section approximativement annulaire ou un contour extérieur au moins pratiquement circulaire ou **en ce que** la substructure (5) pour la table d'usinage (6) présente au niveau de sa base (2, 4) tournée vers le socle ou le bâti de la machine ou disposée sur le socle ou le bâti de la machine une section approximativement ou au moins pratiquement polygonale, de préférence quadrangulaire ou rectangulaire, en particulier approximativement carrée ou un contour extérieur dans la section approximativement ou au moins pratiquement polygonal, en particulier quadrangulaire ou rectangulaire, en particulier approximativement carré, où en particulier au moins deux arêtes parallèles de la section rectangulaire ou carrée sont disposées ou sont parallèles à ou vers un sens de déplacement correspondant d'un mouvement de déplacement ou des éléments de guidage correspondants ou des glissières pour un mouvement de déplacement du châssis pour la tête d'outil.

4. Machine-outil selon la revendication 2 ou la revendication 3, **caractérisée en ce que** la section ou le contour extérieur de la substructure (5) pour la table d'usinage (6) varie de manière continue entre sa face supérieure (7) et sa base (2, 4) et **en ce que** le contour extérieur au moins approximativement circulaire de la substructure et/ou de la section de la substructure au niveau de sa face supérieure, en particulier de manière continue, se transforme en contour extérieur quadrangulaire ou rectangulaire, en particulier carré, de la substructure et/ou de sa section au niveau de sa base.

5. Machine-outil selon la revendication 4, **caractérisée en ce que** la longueur d'arête du carré au niveau de la base de la substructure correspond au diamètre du cercle à la face supérieure de la substructure et/ou le cercle sur la face supérieure de la substructure en projection sur la base forme un cercle inscrit dans le carré sur la base de la substructure et/ou présente le même centre que le carré et est tangentielle dans le centre des arêtes latérales du carré.

6. Machine-outil selon la revendication 4 ou la revendication 5, **caractérisée en ce que** la paroi ou la surface extérieure de la substructure
(i) s'étend au moins approximativement verticalement au niveau de respectivement quatre points extérieurs décalés mutuellement de 90° sur la face supérieure au moins approximativement circulaire ou à un angle d'inclinaison maximal jusqu'à la base de la substructure, en particulier respectivement jusqu'au milieu de côté respectivement d'une des quatre arêtes de la base rectangulaire ou carrée,
(ii) s'étend au niveau de quatre autres points intérieurs sur la face supérieure au moins approximativement circulaire, qui sont situés respectivement entre deux des points extérieurs, à au moins un angle d'inclinaison minimal jusqu'à la base de la substructure, en particulier respectivement jusqu'à un coin correspondant de la base rectangulaire ou carrée, et
(iii) s'étend entre les points extérieurs et les points intérieurs à des angles d'inclinaison variables entre l'angle d'inclinaison maximal et l'angle d'inclinaison minimal.

7. Machine-outil selon la revendication 4 ou la revendication 5, **caractérisée en ce que** la paroi ou la surface extérieure de la substructure présente, d'une part, quatre segments de paroi plans et verticaux ou parois latérales appliqués au niveau de la base de la substructure ou de l'enveloppe sur les arêtes du quadrangle ou du carré et, d'autre part, quatre segments de courbure reliant les quatre segments de paroi plans et verticaux ou parois latérales ou des cloisons courbées, de préférence courbées de manière convexe, où les segments de courbure ou les cloisons courbées, d'une part, vont en diminuant vers la base ou débouchent ponctuellement dans leurs coins ou s'élargissent vers le haut vers la face supérieure ou se rencontrent ou se confondent au niveau de la face supérieure,
ou
**en ce que** les parois latérales vont en diminuant jusqu'à un sommet de la face supérieure de la substructure.

8. Machine-outil selon la revendication 4, la revendication 5 ou la revendication 7, **caractérisée en ce que** la surface latérale ou la surface extérieure de la substructure est composée de segments de triangle alternativement juxtaposés, verticaux, de préférence isocèles et, entre ces derniers, respectivement d'un segment d'un cône renversé sur le sommet, de préférence oblique, où respectivement une ligne frontière d'un segment de triangle coïncide avec une ligne frontière d'un segment de cône.

9. Machine-outil selon l'une des revendications précédentes, **caractérisée en ce que** l'épaisseur de paroi de la substructure (5) est supérieure à 10 cm, de préférence supérieure à 15 cm, en particulier supérieure à 20 cm, ou **en ce que** l'épaisseur de paroi de la substructure (5) est inférieure à 50 cm, de préférence inférieure à 45 cm, en particulier inférieure à 40 cm,
et
**en ce qu'**une bague d'extrémité (44) massive est fixée sur la face supérieure (7) de la substructure (5)
et
**en ce qu'**une bague (45, 50) d'un coussinet de pivotement (8) est fixée sur une bague d'extrémité (44) sur la face supérieure (7) de la substructure (5), en particulier la bague intérieure (45),
et
**en ce qu'**un palier à rouleaux est prévu comme coussinet de pivotement (8) qui, de préférence, est réalisé sur plusieurs rangées, en particulier avec trois rangées d'organes de roulement (47, 48, 49)
et
**en ce qu'**une denture périphérique est prévue sur une bague (45, 50) avec possibilité de rotation du coussinet de pivotement (8) par rapport à la substructure (5), permettant à un élément denté, entraîné ou entraînable, en particulier une roue dentée (60), un pignon ou une vis sans fin de s'engrener.

10. Machine-outil selon l'une des revendications précédentes, **caractérisée en ce que** les surfaces de guidage concentriques sont réalisées sous forme de cône intérieur (64) et de cône extérieur (65) ce qui permet, en particulier, l'autocentrage de la bague d'adaptation (61) et de la bague d'usinage (63).

11. Machine-outil selon l'une des revendications précédentes, **caractérisée en ce que** la bague d'adaptation (61) présente dans sa face supérieure plane un grand nombre de trous de fixation disposés en forme de couronne qui servent à visser une bague d'usinage (63) appliquée, spécifique à la pièce à usiner.

12. Machine-outil selon l'une des revendications précédentes, **caractérisée en ce que** différentes bagues d'usinage (63) en ce qui concerne leur diamètre intérieur sont adaptées à différentes pièces à usiner et/ou, pour le raccordement à une ou plusieurs pièces à usiner, le cas échéant empilées, disposent sur leur face supérieure de logements (66) pour des moyens de fixation, par exemple sous forme de tiges filetées enfichées à travers des trous de raccordement des pièces à usiner (16) ; les logements (66) pouvant comporter un filet intérieur.

13. Machine-outil selon l'une des revendications précédentes, **caractérisée par** au moins un dispositif de freinage pour le blocage de la table d'usinage (6) qui, de préférence, est équipé de mâchoires de frein réglables hydrauliquement ou électriquement, où en particulier le (chaque) dispositif de freinage agit sur la bague d'adaptation (61), en particulier sur un épaulement (62) circonférentiel, radialement saillant vers l'extérieur.

14. Machine-outil selon l'une des revendications précédentes, **caractérisée en ce que** le châssis (19, 20, 35) pour maintenir, supporter, loger et/ou guider une tête d'outil (19, 39) présente un chariot (20) déplaçable horizontalement, où en particulier le chariot (20) déplaçable horizontalement est guidé sur le bâti ou le socle de machine (2-4), en particulier par le biais de glissières (21),
et
**en ce que** le châssis (19, 20, 35) pour maintenir, supporter, loger et/ou guider une tête d'outil (19, 39) présente un chariot (35) déplaçable verticalement.

15. Machine-outil selon la revendication 14, **caractérisée en ce que** le chariot (35) déplaçable verticalement est guidé sur le chariot (20) déplaçable horizontalement et où le chariot (35) déplaçable verticalement est réalisé sous forme de tête de fraisage (19, 39) ou présente une tête de fraisage (19, 39), où en particulier la tête de fraisage ou l'outil de fraisage (39) est monté à rotation en particulier autour d'un axe de rotation (40) horizontal, où en particulier l'axe de rotation (40) de l'outil de fraisage (39), le sens de déplacement (37) du chariot (35) déplaçable verticalement ainsi que le sens de déplacement (23) du chariot (20) déplaçable horizontalement incluent respectivement des angles droits.
